# EUROPEAN PATENT SPECIFICATION

(11) **EP 4 372 529 B1**
(45) Date of publication and mention of the grant of the patent: **30.09.2026**
(21) Application number: 23209816.0
(22) Date of filing: 14.11.2023
(51) Int. Cl.: G06F 3/01, G06F 3/0354, G06F 3/041

(54) **TOUCH PANEL AND CONTROL DEVICE**
BERÜHRUNGSBILDSCHIRM UND STEUERUNGSVORRICHTUNG
PANNEAU TACTILE ET DISPOSITIF DE COMMANDE

(30) Priority: 17.11.2022 CN 202223095722 U
(43) Date of publication of application: 22.05.2024
(73) Proprietor: Siemens Healthineers AG, 91301 Forchheim (DE)
(72) Inventor: GONG, Lin, Shenzhen, 518057 (CN); CHEN, Mei Ling, Shenzhen, 518057 (CN); LI, Chang Zhen, Shenzhen, 518110 (CN)
(74) Representative: HKW Intellectual Property PartG mbB

(56) References cited:
- WO-A1-2010/046494
- US-A- 6 118 435
- US-A1- 2016 124 511
- US-A1- 2021 141 456

## Description

### TECHNICAL FIELD

The present invention relates to the field of touch control, in particular a touch panel in a medical control device.

### BACKGROUND ART

At present, in the case of a medical device having a touch panel, a protective bag will be used to protect the touch panel when a doctor is performing surgery, to prevent blood or sweat stains or other liquids from contaminating the touch panel during surgery and thus affecting the functioning of the touch panel. At the same time, the doctor will be wearing gloves, and such double isolation might result in erroneous operations or failed operations when the doctor is operating the touch panel. At present, the doctor can only confirm whether a finger has touched the screen by subjective vision or touch screen audio reminder, in order to judge whether an operation has been performed correctly.

US 2021/141456 A1 relates to an apparatus that includes a base plate, an interface with a touch-sensitive surface, a piezoelectric actuator and a mechanical reinforcing element, wherein the mechanical reinforcing element is fastened to the piezoelectric actuator Moreover the mechanical reinforcing element is fastened to the interface, wherein the mechanical reinforcing element is configured to deform, as a result of a change of an extension of the piezoelectric actuator, in a first direction such that a partial region of the mechanical reinforcing element is moved relative to the piezoelectric actuator in a second direction perpendicular to the first direction. Moreover, a force is applied to the interface, wherein the interface is moved, by the force applied, in a direction lateral to the touch-sensitive surface, or wherein the interface is moved, by the force applied, in a direction perpendicular to the touch-sensitive surface.

WO 2010/046494 A1 relates to a control device with haptic feedback and which comprises a support plate configured to transmit a haptic feedback to a user, a touch-surface sensor carried by the support plate, configured so as to detect when the user presses on the touch surface, at least one actuator with electromagnet comprising a mobile part linked to said plate and configured so as to move said plate when pressing is detected, - at least one restoring element. Said restoring element is dissociated from said actuator, is linked directly to said plate and is configured so as to exert a restoring force on the mobile part of the actuator with electromagnet by way of said plate.

US 2016/124511 A1 relates to a vehicle operating device that includes a pad surface that is operated by contact with a finger of an operator and an X-direction actuator and a Y-direction actuator that move the pad surface in directions parallel to the pad surface. Moreover, the device includes a track pad that detects a contact position of the finger of the operator on the pad surface and a display controller and a display unit that display at least one item on a display screen, change a display mode on the display screen in accordance with the contact operation with the finger of the operator on the pad surface, and sets a virtual cursor that virtually moves on the display screen. When the virtual cursor reaches a boundary of the item, the X-direction actuator and the Y-direction actuator move the pad surface in a direction of the contact operation of the finger of the operator.

In addition, persons skilled in the art are also making efforts to seek other solutions for touch confirmation.

### SUMMARY

The invention is defined in the appended set of claims. Exemplary aspects and embodiments are described in the following to illustrate the invention. In view of this, embodiments of the present invention propose a medical control device comprising a touch panel to achieve feedback confirmation of a touch operation. Other embodiments that do not fall within the scope of the claims are provided for a more comprehensive understanding of the context of the invention.

It can be seen from the claimed solution that touch feedback can be realized in a large, heavy touch panel due to the inclusion of the suspended component and the fixed component in the control panel in embodiments of the present invention, the suspended component being able to move relative to the fixed component when the touch screen on the suspended component receives a touch signal, and the elastic element being used to realize sustainable vibration feedback.

In addition, by providing the point-contact silicone rubber pad between the suspended component and the fixed component in a direction perpendicular to the plane in which the touch screen lies, friction in the direction of movement can be reduced, and a situation can be avoided in which noise is generated by the suspended component and the fixed component rubbing against each other.

Furthermore, by providing a full ring of sealing foam between the front housing and the rear housing, functions such as waterproofing, dustproofing, noise absorption and cushioning can be realized.

Additionally, the touch panel in embodiments of the present invention is structurally simple, flexible and reliable.

### BRIEF DESCRIPTION OF THE DRAWINGS

Preferred embodiments of the present invention will be described in detail below with reference to the drawings, so that those of ordinary skill in the art have a clearer understanding of the above and other features and advantages of the present invention. In the drawings:
Fig. 1 is a structural schematic diagram of a touch panel in embodiments of the present invention.
Fig. 2 is a schematic diagram of a manner of connecting the fixed component to the suspended component in an example of the present invention.

In the figures, the reference signs are as follows:

| Label | Meaning |
|---|---|
| 10 | Suspended component |
| 11 | Touch screen |
| 12 | Front housing |
| 20 | Fixed component |
| 21 | PCB |
| 22 | Mounting plate |
| 23 | Support |
| 24 | Rear housing |
| 25 | Counterweight |
| 30 | Vibration generating component |
| 31 | First vibration generating member |
| 32 | Second vibration generating member |
| 40 | Elastic element |
| 50 | Sliding mounting member |
| 60 | Silicone rubber pad |
| 70 | Sealing foam |

### DETAILED DESCRIPTION OF EMBODIMENTS

In the present invention, account is taken of the fact that if touch feedback is introduced, giving feedback for reminding and confirming when a doctor touches a screen, the abovementioned problem can be solved. In particular implementation, the use of a vibration feedback method is considered. Taking into account the fact that touch screens of medical devices are generally quite large and heavy, a vibrator such as a piezoelectric vibrating member or vibrating motor, etc. will generally be insufficient to implement the abovementioned vibration feedback if used on its own.

For this reason, the use of relative movement between structures is considered in embodiments of the present invention, in order to realize the vibration feedback. For example, a touch panel may be configured to comprise a suspended component and a fixed component, wherein the fixed component is used to support the suspended component; a touch screen is disposed on the suspended component, can move relative to the fixed component when the touch screen receives a touch signal of a finger, etc., and can be helped to return by an elastic element.

Specifically, the touch panel may comprise a suspended component comprising a touch screen, a fixed component for supporting the suspended component, an elastic element configured to be connected between the suspended component and the fixed component, and a vibration generating component. The elastic element can generate a force causing the suspended component to return to a specific position relative to the fixed component, in response to deviation of the suspended component from the specific position. At least one part of the vibration generating component is disposed on the suspended component, the vibration generating component being able to drive the suspended component to deviate from the specific position, and the vibration generating component cooperating with the elastic element to make the suspended component vibrate.

In particular implementation, the direction of the vibration is parallel to a plane in which the touch screen lies, or perpendicular to the plane in which the touch screen lies.

To enable clearer understanding of the objective, technical solution and effects of the present invention, particular embodiments of the present invention are now explained with reference to the accompanying drawings, in which identical labels indicate structurally identical components or components with similar structures but identical functions.

As used herein, "exemplary" and "schematic" mean "serving as an instance, example or illustration". No drawing or embodiment described herein as "exemplary" or "schematic" should be interpreted as a more preferred or more advantageous technical solution.

To make the drawings appear uncluttered, only those parts relevant to the present invention are shown schematically in the drawings; they do not represent the actual structure thereof as a product.

As used herein, "a" does not only mean "just this one"; it may also mean "more than one". As used herein, "first" and "second" etc. are merely used to differentiate between parts, not to indicate their order or degree of importance, etc.

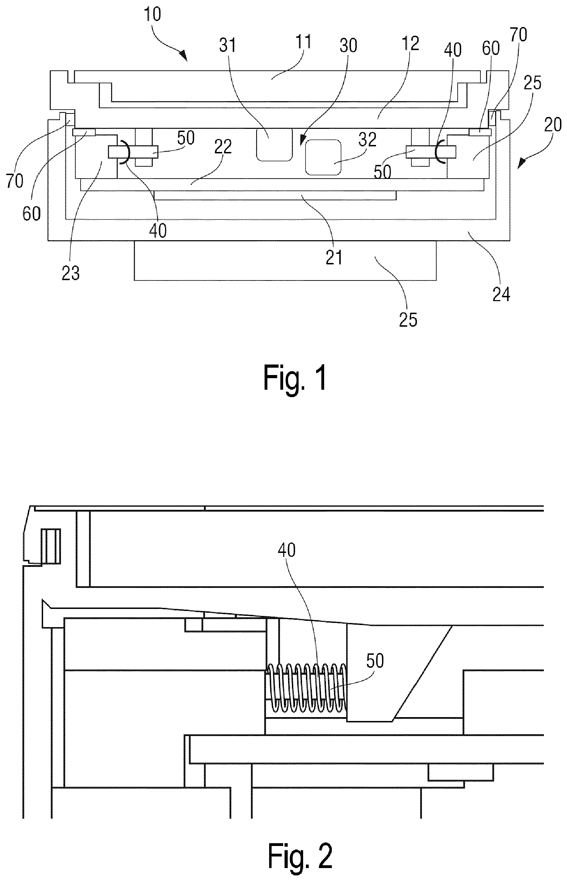

Fig. 1 shows a schematic structural diagram of a touch panel in an embodiment. As shown in Fig. 1, the touch panel in this embodiment comprises: a suspended component 10, a fixed component 20, a vibration generating component 30 and an elastic element 40.

The suspended component 10 comprises a touch screen 11.

The fixed component 20 is used to support the suspended component 10.

The suspended component 10 can move relative to the fixed component 20 when the touch screen 11 receives a touch signal.

At least one part of the vibration generating component 30 is disposed on the suspended component 10, and the vibration generating component 30 can drive the suspended component 10 to deviate from a specific position relative to the fixed component 20.

The elastic element 40 is connected between the suspended component 10 and the fixed component 20, and used to generate a force causing the suspended component 10 to return to the specific position, in response to deviation of the suspended component 10 from the specific position.

The vibration generating component 30 cooperates with the elastic element 40 to make the suspended component 10 vibrate. In the embodiment shown in Fig. 1, taking as an example the case where the direction of the vibration is parallel to the plane in which the touch screen 11 lies, as shown in Fig. 1, the vibration generating component 30 in this embodiment comprises a first vibration generating member 31 disposed on the suspended component 10 and a second vibration generating member 32 disposed on the fixed component 20, wherein the first vibration generating member 31 and second vibration generating member 32 are arranged opposite each other in a direction parallel to the plane in which the touch screen 11 lies. The vibration generating component 30 drives the suspended component 10 to deviate from a specific position relative to the fixed component 20, by means of an electromagnetic force generated between the first vibration generating member 31 and second vibration generating member 32 in a direction parallel to the plane in which the touch screen 11 lies. In other embodiments, the direction of vibration may be perpendicular to the plane in which the touch screen 11 lies, in which case the first vibration generating member 31 and second vibration generating member 32 may be arranged opposite each other in a direction perpendicular to the plane in which the touch screen 11 lies, and the vibration generating component 30 drives the suspended component 10 to deviate from a specific position relative to the fixed component 20, by means of an electromagnetic force generated between the first vibration generating member 31 and second vibration generating member 32 in a direction perpendicular to the plane in which the touch screen 11 lies.

In particular implementation, the electromagnetic force generated between the first vibration generating member 31 and second vibration generating member 32 may be an attractive force. For example, when the touch screen 11 receives a touch signal, the first vibration generating member 31 or second vibration generating member 32 may be controlled to be energized and generate magnetism, thereby generating an attractive force between the first vibration generating member 31 and second vibration generating member 32, driving the suspended component 10 to move in a set direction under the action of the attractive force, and compressing or pulling the elastic element 40 to generate elastic potential energy; when the first vibration generating member 31 or second vibration generating member 32 is de-energized and the magnetism disappears, the elastic element 40 releases the elastic potential energy and drives the suspended component 10 to return. In this case, the specific position of the suspended component 10 relative to the fixed component 20 is a position to which the suspended component 10 is caused to return.

Alternatively, the electromagnetic force generated between the first vibration generating member 31 and second vibration generating member 32 may be a repulsive force. For example, the first vibration generating member 31 or second vibration generating member 32 may be kept energized to generate magnetism, thereby generating a repulsive force between the first vibration generating member 31 and second vibration generating member 32, and compressing or pulling the elastic element 40 to generate elastic potential energy, while causing the suspended component 10 to remain at a set position; when the touch screen 11 receives a touch signal, the first vibration generating member 31 or second vibration generating member 32 is controlled to be de-energized, the magnetism disappears, and the elastic element 40 releases the elastic potential energy and drives the suspended component 10 to move in a set direction; when the first vibration generating member 31 or second vibration generating member 32 is energized again and generates magnetism, a repulsive force is generated between the first vibration generating member 31 and second vibration generating member 32, and the suspended component 10 is driven to return under the action of the repulsive force. In this case, the specific position of the suspended component 10 relative to the fixed component 20 is a position to which the suspended component 10 is caused to move in a set direction away from the set position.

In this embodiment, the suspended component 10 further comprises a front housing 12.

The touch screen 11 is disposed at an outer side of the front housing 12, e.g. above the front housing as in Fig. 1, and the first vibration generating member 31 is disposed at an inner side of the front housing 13, e.g. below the front housing as in Fig. 1.

The fixed component 20 comprises a PCB 21, a mounting plate 22, a support 23 and a rear housing 24.

The PCB 21 is separately electrically connected to the touch screen 11 and the vibration generating component 30, e.g. electrically connected to the first vibration generating member 31 or second vibration generating member 32.

The mounting plate 22 is fixed to the support 23; the PCB 21 is disposed at one side of the mounting plate 22, e.g. below the mounting plate as in Fig. 1; and the second vibration generating member 32 is disposed at the side of the mounting plate 22 that faces the front housing 12, e.g. above the mounting plate as in Fig. 1. In other embodiments, the PCB 21 may be disposed at other positions, which are not defined here.

In particular implementation, the fixed component 20 may support the suspended component 10 in various ways. For example, Fig. 2 shows a mounting method in the case where the direction of the vibration is parallel to the plane in which the touch screen 11 lies. As shown in Fig. 2, the fixed component 20 is connected to the suspended component 10 in a direction parallel to the plane in which the touch screen lies by means of a sliding mounting member 50, such that the suspended component 10 can move relative to the fixed component 20 in a direction parallel to the plane in which the touch screen lies. In this embodiment, the sliding mounting member 30 is connected between the front housing 12 and the support 23.

The elastic element 40 is disposed on the sliding mounting member 50, and guided by the sliding mounting member 50. In this embodiment, the sliding mounting member 50 may be a partially threaded screw member.

In the case where the direction of the vibration is perpendicular to the plane in which the touch screen 11 lies, the supporting of the suspended component 10 by the fixed component 20 may be accomplished by means of an elastic element of higher rigidity, i.e. the fixed component 20 and suspended component 10 are connected by an elastic element of higher rigidity directly.

The rear housing 24 is disposed at the periphery of the PCB 21, the mounting plate 22 and the support 23, and connected to the front housing 12.

In this embodiment, a region of contact between the suspended component 10 and the fixed component 20 in a direction perpendicular to the plane in which the touch screen lies is further provided with a point-contact silicone rubber pad 60. That is, contact between the front housing 12 and the support 23 in the direction perpendicular to the touch screen is designed as point contact rather than surface contact, thereby reducing friction in the direction of movement when the suspended component 10 moves relative to the fixed component 20; and the provision of the silicone rubber pad adhered in the middle of the point contact can avoid a situation in which noise is generated by the suspended component 10 and the fixed component 20 rubbing against each other. In this embodiment, the reason for choosing silicone rubber is that the properties of silicone rubber do not change much when it is compressed for a long period of time.

In addition, a full ring of sealing foam 70 may be further provided between the front housing 12 and the rear housing 24 in this embodiment, to realize functions such as waterproofing, dustproofing, noise absorption (sealing the entire product), and cushioning (avoiding noise due to structural collisions).

Further, the fixed component 20 in this embodiment may further comprise: a counterweight 25, which may together with the rear housing 24 form a fixed base, to avoid a situation in which body vibration arises as the suspended structure 10 vibrates, causing resonance and thus affecting the vibration feedback result. Of course, if the touch panel is mounted on a fixed support, the counterweight 25 need not be used.

In other embodiments, the vibration generating component may have other structural forms. For example, the vibration generating component may employ a cam mechanism. For example, the vibration generating component may comprise a push-rod (not shown in the figures) disposed on the suspended component and a cam member (not shown in the figures) disposed on the fixed component. Correspondingly, the vibration generating component may drive the suspended component to deviate from the specific position by means of a pushing force applied to the push-rod by the cam member. In the case where the direction of the vibration is parallel to the plane in which the touch screen 11 lies, the pushing force may be in a direction parallel to the plane in which the touch screen lies; in the case where the direction of the vibration is perpendicular to the plane in which the touch screen 11 lies, the pushing force may be in a direction perpendicular to the plane in which the touch screen lies.

The solution described above in embodiments of the present invention may be used not only for touch panels on medical devices but also, in embodiments outside the scope of the claimed invention, in other large touch panels, such as motor vehicle central control screens, etc.

In addition, a control device is further provided according to the invention, comprising the touch panel described in any one of the embodiments above. The control device is a medical device or, in embodiments outside the scope of the claimed invention, a motor vehicle, etc.

It can be seen from the solution above that in embodiments of the present invention, touch feedback can be realized due to the inclusion of the suspended component and the fixed component, the suspended component being able to move relative to the fixed component when the touch screen on the suspended component receives a touch signal, and return when the touch signal disappears. Furthermore, due to the use of the elastic component to realize sustainable vibration feedback, touch feedback can be realized for large, heavy touch panels.

In addition, by providing the point-contact silicone rubber pad between the suspended component and the fixed component in a direction perpendicular to the touch screen, friction in the direction of movement can be reduced, and a situation can be avoided in which noise is generated by the suspended component and the fixed component rubbing against each other.

Furthermore, by providing a full ring of sealing foam between the front housing and the rear housing, functions such as waterproofing, dustproofing, noise absorption and cushioning can be realized.

Additionally, the touch panel in embodiments of the present invention is structurally simple, flexible and reliable.

The embodiments above are merely preferred embodiments of the present invention, which are not intended to limit it. The scope of the invention is defined by the claims.

## Claims

1. A control device comprising a touch panel, the touch panel comprising:
a suspended component (10), comprising a touch screen (11);
a fixed component (20), for supporting the suspended component (10);
an elastic element (40), configured to be connected between the suspended component (10) and the fixed component (20), the elastic element (40) generating a force causing the suspended component (10) to return to a specific position relative to the fixed component (20), in response to deviation of the suspended component (10) from the specific position; and
a vibration generating component (30), at least one part of which is disposed on the suspended component (10), the vibration generating component (30) being able to drive the suspended component (10) to deviate from the specific position, and the vibration generating component (30) cooperating with the elastic element (40) to make the suspended component (10) vibrate,
wherein the direction of the vibration is parallel to a plane in which the touch screen (11) lies,
**characterised in that**:
the control device is a medical device; and
the vibration generating component (30) comprises a push-rod disposed on the suspended component (10) and a cam member disposed on the fixed component (20);
the vibration generating component (30) being able to drive the suspended component (10) to deviate from the specific position, by means of a pushing force applied to the push-rod by the cam member in a direction parallel to the plane in which the touch screen (11) lies.

2. The control device as claimed in claim 1, the touch panel further comprising: a sliding mounting member (50), which connects the fixed component (20) to the suspended component (10) in a direction parallel to the plane in which the touch screen (11) lies, enabling the suspended component (10) to deviate from the specific position relative to the fixed component (20) in a direction parallel to the plane in which the touch screen (11) lies; the elastic element (40) being disposed on the sliding mounting member (50), and guided by the sliding mounting member (50).

3. The control device as claimed in claim 2, wherein the sliding mounting member (50) is a partially threaded screw member.

4. The control device as claimed in claim 2, wherein a region of contact between the suspended component (10) and the fixed component (20) in a direction perpendicular to the plane in which the touch screen (11) lies is further provided with a point-contact silicone rubber pad (60).

5. The control device as claimed in claim 2, wherein the suspended component (10) further comprises: a front housing (12), the touch screen (11) being disposed at an outer side of the front housing (12), and said at least one part of the vibration generating component (30) being disposed at an inner side of the front housing (12);
the fixed component (20) further comprises: a mounting plate (22), a support (23) and a rear housing (24); the sliding mounting member (50) is connected between the front housing (12) and the support (23); the mounting plate (22) is fixed to the support (23), a part of the vibration generating component (30) other than said at least one part is disposed at a side of the mounting plate (22) that faces the front housing (12), and the rear housing (24) is disposed at the periphery of the mounting plate (22) and the support (23) and connected to the front housing (12).

6. The control device as claimed in claim 5, further comprising: sealing foam (70) disposed between the front housing (12) and the rear housing (24).

7. The control device as claimed in claim 5, wherein the fixed component (20) further comprises: a counterweight (25) which, together with the rear housing (24), forms a fixed base.

## Patentansprüche

1. Steuervorrichtung umfassend ein Berührungsfeld, wobei das Berührungsfeld umfasst:
eine eingehängte Komponente (10), die einen Berührungsbildschirm (11) umfasst;
eine feste Komponente (20) zum Tragen der eingehängten Komponente (10);
ein elastisches Element (40), gestaltet zur Verbindung zwischen der eingehängten Komponente (10) und der festen Komponente (20), wobei das elastische Element (40) eine Kraft erzeugt, die in Reaktion auf Abweichung der eingehängten Komponente (10) von einer spezifischen Position relativ zu der festen Komponente (20) bewirkt, dass die eingehängte Komponente (10) in die spezifische Position zurückkehrt; und
eine schwingungserzeugende Komponente (30), von der wenigstens ein Teil an der eingehängten Komponente (10) angeordnet ist, wobei die schwingungserzeugende Komponente (30) fähig ist, die eingehängte Komponente (10) anzutreiben, um von der spezifischen Position abzuweichen, und die schwingungserzeugende Komponente (30) mit dem elastischen Element (40) zusammenwirkt, um die eingehängte Komponente (10) schwingen zu lassen,
wobei die Richtung der Schwingung parallel zu einer Ebene ist, in der der Berührungsbildschirm (11) liegt,
**dadurch gekennzeichnet, dass**:
die Steuervorrichtung eine medizinische Vorrichtung ist; und
die schwingungserzeugende
Komponente (30) eine Schubstange, die an der eingehängten Komponente (10) angeordnet ist, und ein Nockenelement, das an der festen Komponente (20) angeordnet ist, umfasst;
die schwingungserzeugende Komponente (30) fähig ist, die eingehängte Komponente (10) durch eine von dem Nockenelement in einer Richtung parallel zu der Ebene, in der der Berührungsbildschirm (11) liegt, auf die Schubstange ausgeübte Schubkraft von der spezifischen Position auszulenken.

2. Steuervorrichtung nach Anspruch 1, wobei das Berührungsfeld ferner umfasst: ein verschiebbares Befestigungselement (50), das die feste Komponente (20) mit der eingehängten Komponente (10) in einer Richtung parallel zu der Ebene, in der der Berührungsbildschirm (11) liegt, verbindet, um der eingehängten Komponente (10) Auslenkung von der spezifischen Position relativ zu der festen Komponente (20) in einer Richtung parallel zu der Ebene, in der der der Berührungsbildschirm (11) liegt, zu ermöglichen; wobei das elastische Element (40) an dem verschiebbaren Befestigungselement (50) angeordnet ist und von dem verschiebbaren Befestigungselement (50) geführt wird.

3. Steuervorrichtung nach Anspruch 2, wobei das verschiebbare Befestigungselement (50) ein teilweise gewindeversehenes Schraubelement ist.

4. Steuervorrichtung nach Anspruch 2, wobei ein Kontaktbereich zwischen der eingehängten Komponente (10) und der festen Komponente (20) in einer Richtung senkrecht zu der Ebene, in der der Berührungsbildschirm (11) liegt, ferner mit einem Punktkontakt-Silikongummikissen (60) versehen ist.

5. Steuervorrichtung nach Anspruch 2, wobei die eingehängte Komponente (10) ferner umfasst: ein vorderes Gehäuse (12), wobei der Berührungsbildschirm (11) an einer Außenseite des vorderen Gehäuses (12) angeordnet ist und der wenigstens eine Teil der schwingungserzeugenden Komponente (30) an einer Innenseite des vorderen Gehäuses (12) angeordnet ist;
wobei die feste Komponente (20) ferner umfasst: eine Befestigungsplatte (22), einen Träger (23) und ein hinteres Gehäuse (24); wobei das verschiebbare Befestigungselement (50) zwischen dem vorderen Gehäuse (12) und dem Träger (23) verbunden ist; die Befestigungsplatte (22) an dem Träger (23) befestigt ist, ein anderer Teil der schwingungserzeugenden Komponente (30) als der wenigstens eine Teil an einer dem vorderen Gehäuse (12) zugewandten Seite der Befestigungsplatte (22) angeordnet ist und das hintere Gehäuse (24) am Umfang der Befestigungsplatte (22) und des Trägers (23) angeordnet ist und mit dem vorderen Gehäuse (12) verbunden ist.

6. Steuervorrichtung nach Anspruch 5, ferner umfassend: Dichtungsschaum (70), der zwischen dem vorderen Gehäuse (12) und dem hinteren Gehäuse (24) angeordnet ist.

7. Steuervorrichtung nach Anspruch 5, wobei die feste Komponente (20) ferner umfasst: ein Gegengewicht (25), das zusammen mit dem hinteren Gehäuse (24) eine feste Basis bildet.

## Revendications

1. Dispositif de commande comprenant un panneau tactile, le panneau tactile comprenant :
un composant suspendu (10), comprenant un écran tactile (11) ;
un composant fixe (20), destiné à supporter le composant suspendu (10) ;
un élément élastique (40), configuré pour être relié entre le composant suspendu (10) et le composant fixe (20), l'élément élastique (40) générant une force provoquant le retour du composant suspendu (10) à une position spécifique par rapport au composant fixe (20), en réponse à un écartement du composant suspendu (10) par rapport à la position spécifique ; et
un composant de génération de vibration (30), dont au moins une partie est disposée sur le composant suspendu (10), le composant de génération de vibration (30) étant apte à amener le composant suspendu (10) à s'écarter de la position spécifique, et le composant de génération de vibration (30) coopérant avec l'élément élastique (40) pour faire vibrer le composant suspendu (10),
dans lequel la direction de la vibration est parallèle à un plan dans lequel s'étend l'écran tactile (11),
**caractérisé en ce que** :
le dispositif de commande est un dispositif médical ; et
le composant de génération
de vibration (30) comprend une tige de poussée disposée sur le composant suspendu (10) et un organe formant came disposé sur le composant fixe (20) ;
le composant de génération de vibration (30) étant apte à amener le composant suspendu (10) à s'écarter de la position spécifique, au moyen d'une force de poussée appliquée à la tige de poussée par l'organe formant came dans une direction parallèle au plan dans lequel s'étend l'écran tactile (11).

2. Dispositif de commande selon la revendication 1, le panneau tactile comportant en outre : un organe de montage coulissant (50), qui relie le composant fixe (20) au composant suspendu (10) dans une direction parallèle au plan dans lequel s'étend l'écran tactile (11), permettant au composant suspendu (10) de s'écarter de la position spécifique par rapport au composant fixe (20) dans une direction parallèle au plan dans lequel s'étend l'écran tactile (11) ; l'élément élastique (40) étant disposé sur l'organe de montage coulissant (50) et guidé par l'organe de montage coulissant (50).

3. Dispositif de commande selon la revendication 2, dans lequel l'organe de montage coulissant (50) est un organe formant vis partiellement fileté.

4. Dispositif de commande selon la revendication 2, dans lequel une zone de contact entre le composant suspendu (10) et le composant fixe (20) dans une direction perpendiculaire au plan dans lequel s'étend l'écran tactile (11) est en outre pourvue d'un tampon en caoutchouc silicone à contact ponctuel (60).

5. Dispositif de commande selon la revendication 2, dans lequel le composant suspendu (10) comprend en outre : un boîtier avant (12), l'écran tactile (11) étant disposé d'un côté extérieur du boîtier avant (12), et ladite au moins une partie du composant de génération de vibration (30) étant disposée d'un côté intérieur du boîtier avant (12) ;
le composant fixe (20) comprend en outre : une plaque de montage (22), un support (23) et un boîtier arrière (24) ; l'organe de montage coulissant (50) est relié entre le boîtier avant (12) et le support (23) ; la plaque de montage (22) est fixée au support (23), une partie du composant de génération de vibration (30) autre que ladite au moins une partie est disposée d'un côté de la plaque de montage (22) faisant face au boîtier avant (12), et le boîtier arrière (24) est disposé à la périphérie de la plaque de montage (22) et du support (23) et relié au boîtier avant (12).

6. Dispositif de commande selon la revendication 5, comprenant en outre :
une mousse d'étanchéité (70) disposée entre le boîtier avant (12) et le boîtier arrière (24).

7. Dispositif de commande selon la revendication 5, dans lequel le composant fixe (20) comprend en outre : un contrepoids (25) qui, conjointement avec le boîtier arrière (24), forme une base fixe.
